(19) Europäisches Patentamt / European Patent Office / Office européen des brevets

(11) **EP 4 418 162 A1**

(12) **EUROPEAN PATENT APPLICATION**
published in accordance with Art. 153(4) EPC

(43) Date of publication:
**21.08.2024 Bulletin 2024/34**

(21) Application number: **22883695.3**

(22) Date of filing: **11.04.2022**

(51) International Patent Classification (IPC):
**G06F 30/3308** (2020.01)   **G06F 30/398** (2020.01)
**G06F 3/06** (2006.01)   **G06F 7/76** (2006.01)

(52) Cooperative Patent Classification (CPC):
**G06F 3/06; G06F 7/76; G06F 30/3308; G06F 30/398**

(86) International application number:
**PCT/KR2022/005230**

(87) International publication number:
**WO 2023/068464 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.10.2021 KR 20210141160**
**07.04.2022 KR 20220043556**

(71) Applicant: **Seoul National University R&DB Foundation**
**Seoul 08826 (KR)**

(72) Inventors:
• **LEE, Jae Jin**
**Seoul 08826 (KR)**
• **PARK, Dae Young**
**Seoul 08826 (KR)**
• **KIM, Hee Hoon**
**Seoul 08826 (KR)**
• **KIM, Jin Pyo**
**Seoul 08826 (KR)**

(74) Representative: **Manitz Finsterwald**
**Patent- und Rechtsanwaltspartnerschaft mbB**
**Martin-Greif-Strasse 1**
**80336 München (DE)**

(54) **QUANTUM CIRCUIT SIMULATION SYSTEM USING STORAGE DEVICE, AND OPERATION METHOD THEREOF**

(57)    A quantum circuit simulation device according to the present disclosure includes a storage system including one or more storage devices, and a host system connected to the storage system and configured to simulate a quantum circuit, wherein the quantum circuit stored in the storage system may be partitioned into one or more sub-circuits, and the host system may sequentially simulate the one or more sub-circuits in a main memory.

*FIG. 1*

## Description

### BACKGROUND

Embodiments relate to a quantum circuit simulation technology, and more specifically, to a technology of executing an algorithm described as a quantum circuit by using a classical computer.

Quantum computing is a computing paradigm that uses a quantum mechanical phenomenon, such as quantum superposition and entanglement. The minimum unit of quantum computing is qubit which may represent a superposed state of 0 and 1 unlike the bit of classical computing. A computational model of the quantum computing is called a quantum circuit, and the quantum circuit is a set of N qubits and a series of quantum gates that act on the qubits.

In order for a classical computer to represent quantum information, exponentially increasing memory is required. The state expressed by N qubits may be represented by a total of $2^n$ amplitudes. Each amplitude is expressed as a complex number and may generally be represented by 16 bytes of memory. Therefore, in order to simulate a quantum circuit consisting of N qubits, a storage space of $2^{(N+4)}$ bytes are required. Exponentially increasing memory requirements are the biggest barrier to quantum circuit simulation.

The existing quantum circuit simulation technology uses a supercomputer with thousands nodes to tens of thousands of nodes to handle enormous memory requirements. However, with the technology, it is difficult to perform the simulation of a quantum circuit larger than 50 qubits, even using today's largest supercomputers. In addition, using the supercomputers has the disadvantage of requiring enormous costs and making it difficult for ordinary users to even access the supercomputers.

### SUMMARY

According to embodiments, a system that simulates a quantum circuit in units of a plurality of sub-circuits by using a host system connected to a storage system including a plurality of storage devices may be provided.

According to embodiments, a method of providing a necessary storage space for quantum circuit simulation by using a storage device that is cheaper than a memory and has large storage capacity, such as a hard disk drive (HDD), a solid state drive (SSD), or non-volatile memory express (NVMe) and simulating quantum circuits with a reasonable cost and time.

According to embodiments, an optimized simulation method may be provided by simulating in sub-circuit units for minimizing the number of memory accesses, performing a permutation operation in three steps to maximize a memory bandwidth, and applying a prefetching technique.

Other aspects, features, and advantages in addition to the descriptions given above will become apparent from the following drawings, claims, and detailed description of the disclosure.

According to an aspect of an embodiment, a quantum circuit simulation device includes a storage system including one or more storage devices, and a host system connected to the storage system and configured to simulate a quantum circuit, wherein the quantum circuit stored in the storage system may be partitioned into one or more sub-circuits, and the host system may sequentially simulate the one or more sub-circuits in a main memory.

According to another aspect of an embodiment, a quantum circuit simulation method includes partitioning an input quantum circuit stored in a storage device into one or more sub-circuits, and sequentially reading the one or more sub-circuits from the storage device and simulating the one or more sub-circuits in a main memory.

### BRIEF DESCRIPTION OF THE DRAWINGS

Embodiments of the inventive concept will be more clearly understood from the following detailed description taken in conjunction with the accompanying drawings in which:

FIG. 1 is a block diagram of a quantum circuit simulation device using a storage device, according to an embodiment;
FIG. 2 is a flowchart of a quantum circuit simulation method using a storage device, according to an embodiment;
FIG. 3 is an example of sub-circuits obtained by partitioning an input quantum circuit, according to an embodiment;
FIG. 4 is a flowchart of a method of partitioning an input quantum circuit, according to an embodiment;
FIG. 5 is a flowchart of a method of simulating a plurality of sub-circuits, according to an embodiment;
FIG. 6 is an example of a data representation for simulating a plurality of sub-circuits, according to an embodiment; and
FIG. 7 is an implementation example of a storage system according to an embodiment.

### DETAILED DESCRIPTION OF THE EMBODIMENTS

Hereinafter, embodiments will be described in detail with reference to the attached drawings. However, the scope of rights is not limited by the embodiments. The same reference numerals in each drawing indicate the same members.

Terms used in the description below have been selected to be general and universal in the related technical field, but there may be other terms depending on technological developments and/or changes, preferences of customary technicians, and so on. Accordingly, the terms used in the description below should not be understood as limiting the technical idea and should be understood as illustrative terms for describing embodiments.

Also, in certain cases, there are terms randomly selected by the applicant, and in this case, the detailed meaning will be described in the relevant description. Therefore, the terms used in the description below should be understood based on the meaning of the terms and the overall content of the specification, not just the names of the terms.

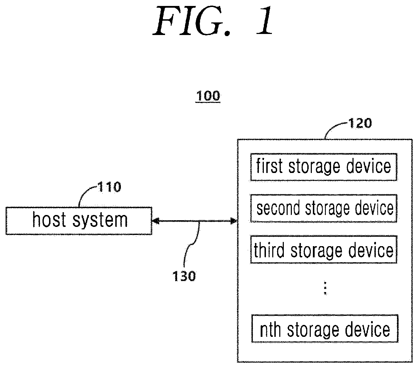

FIG. 1 is a block diagram of a quantum circuit simulation device 100 using a storage device, according to an embodiment. The quantum circuit simulation device 100 may include a host system 110 and a storage system 120. The host system 110 is a system in which actual calculations are performed and includes a heterogeneous system including a central processing unit (CPU), a main memory, and graphics processing unit (GPU). The storage system 120 includes a plurality of storage devices, for example, a hard disk drive (HDD), a solid state drive (SSD), and non-volatile memory express (NVMe). The storage system 120 may be connected to the host system 110 through a redundant array of independent disk (RAID) card 130. The RAID card 130 is used to connect multiple arrays of independent disks to a host CPU and may mainly operate by being combined with a peripheral component interconnect express_(PCIe) slot. The PCIe refers to a serial interface for input and output.

The quantum circuit simulation device 100 receives a quantum circuit as input data and partitions the quantum circuit into several sub-circuits through a sub-circuit partitioning process. The quantum circuit simulation device 100 sequentially operates all sub-circuits in each sub-circuit unit. The quantum circuit simulation device 100 may represent a state (overlapping and entangled states of qubits) of a quantum system as a probability amplitude. In order to represent an N qubit quantum circuit, the quantum circuit simulation device 100 has to store $2^N$ pieces of probability amplitude data, and each quantum gate operation may be regarded as update of $2^N$ probability amplitude data.

According to one embodiment, the quantum circuit simulation device 100 includes the storage system 120 including one or more storage devices and the host system 110 that is connected to the storage system 120 and simulates a quantum circuit, and by partitioning the quantum circuit stored in the storage system 120 into one or more sub-circuits, the host system 110 may sequentially simulate one or more sub-circuits with a main memory. In one embodiment, the host system 110 may access once the storage system 120 where each probability amplitude data required during each simulation for each of one or more sub-circuits is continuously stored, sequentially read each probability amplitude data into the main memory, and continuously write the probability amplitude data of the main memory, in which the probability amplitude data that is a simulation result of each of the one or more sub-circuits is continuously stored, to the storage system 120. In one embodiment, the host system 110 may partition the input quantum circuit into minimal sub-circuits.

According to one embodiment, the host system 110 of the quantum circuit simulation device 100 may sequentially check quantum gates of an input quantum circuit by using a heuristic algorithm based on a parameter M set according to a size of the main memory and may generate sub-circuits.

According to one embodiment, the host system 110 of the quantum circuit simulation device 100 may convert a permutation operation for each of one or more sub-circuits into a 1-step in-memory permutation operation, a 2-step block permutation operation, and a 3-step in-memory permutation operation and sequentially perform the permutation operations. In one embodiment, the 1-step in-memory permutation operation and the 3-step in-memory permutation operation may change a data layout in the main memory, and the 2-step block permutation operation may change a data layout in the storage.

According to one embodiment, while sequentially simulating one or more sub-circuits, the quantum circuit simulation device 100 may access the storage system once during an operation of the sub-circuit currently being operated in the memory and may continuously read the probability amplitude data for the next sub-circuit into the main memory in advance before simulation of the next sub-circuit.

In one embodiment, the storage system 120 may include any one of an HDD, an SSD, or an NVMe.

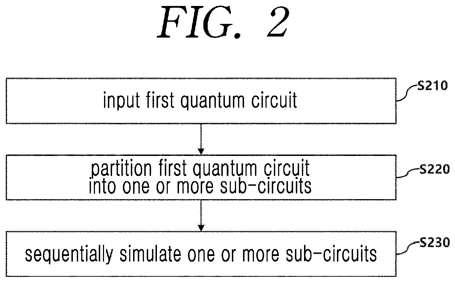

FIG. 2 is a flowchart of a quantum circuit simulation method using a storage device, according to an embodiment.

In step S210, the quantum circuit simulation device 100 may receive a first quantum circuit as an input. The first quantum circuit is a set of N qubits and a series of quantum gates acting on the qubits. A state represented by N qubits may be represented as a total of $2^N$ amplitudes, and each amplitude is represented as a complex number and is generally represented as 16 bytes of memory. The first quantum circuit may be represented as $2^N$ probability amplitude data, and each quantum gate operation may be represented as an update of $2^N$ probability amplitude data. In order to simulate a quantum circuit including N qubits, a storage space of $2^{(N+4)}$ bytes is required.

In step S220, the quantum circuit simulation device 100 may partition the first quantum circuit into one or more sub-circuits by using the parameter M. The sub-circuit has two characteristics. First, in each sub-circuit, the gate may only be applied to M consecutive qubits from the beginning. In this case, an M value is given as a parameter, and $2^{(M+4)}$ is set to a value smaller than the total memory (dynamic random access memory: DRAM) size of the host system 110. Second, each sub-circuit is assigned with a permutation, and gates are rearranged according to the order of permutations. For example, when an input quantum circuit is partitioned into three sub-circuits, each sub-circuit may be assigned with permutations of (q4q3q2q1q0), (q1q2q0q4q3), and (q3q1q4q2q0). The purpose of partitioning the input quantum circuit into sub-circuits is to reduce the number (or size) of accesses to a storage deviceduring simulation. In various embodiments, a quantum circuit given as an input may be partitioned into a plurality of sub-circuits, and each sub-circuit may include only operatable quantum gates. When operating sub-circuits including only operatable quantum gates, all quantum gate operations of each sub-circuit may be performed without additional access to a storage device. In one embodiment, the quantum circuit simulation device 100 may cause qubits that are likely to be used next to be provided below in the quantum circuit by using a heuristic algorithm to partition the input quantum circuit into sub-circuits. In various embodiments, there may be one or more algorithms that partition an input quantum circuit into sub-circuits that are efficient execution units, and it is obvious that the algorithms may be executed differently depending on characteristics of the quantum circuit simulation device 100. In various embodiments, as few sub-circuits as possible may be generated for the input quantum circuit.

In step S230, the quantum circuit simulation device 100 may sequentially simulate one or more sub-circuits. In order to simulate a sub-circuit, the quantum circuit simulation device 100 may access only once the storage system 120 in which probability amplitude data for the sub-circuit are continuously stored and read the probability amplitude data continuously from a main memory. According to the permutation assigned to each sub-circuit, a unit size read from the storage device 120 may be a minimum of 16 bytes which is very small size, and in this case, a problem may occur in which a bandwidth of the storage device 120 is not fully utilized. In various embodiments, the quantum circuit simulation device 100 may fix the minimum unit of access operations for all storage devices to be relatively large by applying a 3-step permutation operation. The 3-step permutation operation is performed by partitioning one permutation operation into three steps. In this case, the permutation is partitioned into two in-memory permutations and a block permutation and is performed in the order of in-memory permutation, block permutation, and in-memory permutation. The in-memory permutation refers to an operation of changing a data layout in memory after reading data into a main memory. The block permutation refers to changing the data layout in a storage device. By fixing the minimum unit of access operation for all storage devices to a relatively large size by using the 3-step permutation operation, an effect of utilizing a bandwidth of the storage device much better than performing simple a memory access operation may be obtained. However, an additional memory operation is required for two in-memory permutations, which is an access to a memory, and the additional memory operation is much faster than accessing a storage device, and accordingly, considering the total computation time, it is more efficient to apply the 3-step permutation operation.

In one embodiment, the quantum circuit simulation device 100 sequentially simulates the partitioned sub-circuits, and accordingly, it is possible to know an exact position value of the data for the sub-circuit that will be used next to the currently operating sub-circuit. Accordingly, the quantum circuit simulation device 100 may use a prefetching technology to optimize simulation. The quantum circuit simulation device 100 may load in advance the probability amplitude data for a second sub-circuit to be operated after the currently operating first sub-circuit, that is, may lead the probability amplitude data into a main memory by accessing once a storage device in which the probability amplitude data for the second sub-circuit are continuously stored during operation of the first sub-circuit.

In one embodiment, the quantum circuit simulation device 100 may continuously write the probability amplitude data continuously stored in the main memory to the storage device according to simulation results for each sub-circuit with only one access.

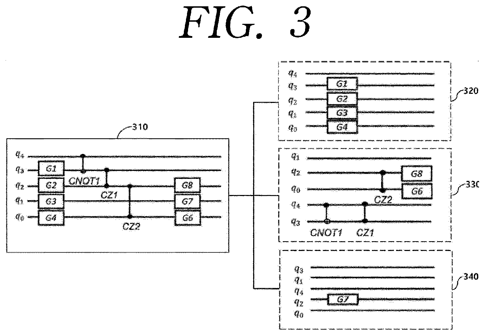

FIG. 3 is an example of sub-circuits obtained by partitioning an input quantum circuit in one embodiment. In various embodiments, an input quantum circuit may be partitioned into sub-circuits that are units for efficient operation. The purpose of partitioning into sub-circuits is to reduce access to a storage. In a quantum circuit, a memory access pattern is determined according to an application position of each quantum gate. For example, a quantum gate applied to the first qubit has to simultaneously read two data located at a distance of 16 bytes (stride), and a quantum gate applied to the second qubit from below has to simultaneously access two pieces of data located at a distance of 32 bytes. In general, a quantum gate applied to the kth qubit from below requires simultaneously two pieces of data located at a distance of $2^{k+3}$ bytes. When 2M consecutive pieces of data are stored in a main memory, a quantum gate for the qubits located in the Mth or higher positions from below may not be operated immediately. This is because one of data pairs required for quantum gate application is not loaded in the main memory. Therefore, in this case, additional access to a storage device is required to operate the quantum gates. In various embodiments, the quantum circuit simulation device 100 may set a parameter M according to a size of the main memory to efficiently operate an input quantum circuit, partition the input quantum circuit into one or more sub-circuits by using the parameter M, and simulation may be performed on a sub-circuit basis.

Referring to FIG. 3, the quantum circuit simulation device 100 may partition an input quantum circuit 310 into three sub-circuits 320, 330, and 340 by using a heuristic algorithm. The quantum circuit simulation device 100 may set the parameter M by considering a size of a main memory (DRAM) of the host system 110 to partition the input quantum circuit 310 into sub-circuits of a maximum size feasible without additional access to a separate storage system 120. For example, the parameter M may be set to be smaller by $2^{(M+4)}$ than a size of a main memory. In FIG. 3, M = 4. In each sub-circuit, a gate may only be applied to M consecutive qubits from the beginning. That is, a gate applied to each sub-circuit may only be applied to a maximum of 4 (M size) qubits from below and is not applied to the qubit located at the top. Sub-circuits partitioned by using the parameter M include only operatable quantum gates and do not require access to an additional storage device during operation. The quantum circuit simulation device 100 performs simulation on a sub-circuit basis, requiring only one operation of reading necessary data pairs from a storage device and one operation of storing the calculated result again to the storage.

The quantum circuit simulation device 100 may assign permutations to each partitioned sub-circuit and rearrange the gates according to the permutation order as illustrated in FIG. 3. Input quantum circuits are assigned in the order of (q4q3q2q1q0), the partitioned first sub-circuit 320 is assigned in the order of (q4q3q2q1q0), the partitioned second sub-circuit 330 is assigned in the order of (q1q2q0q4q3), the partitioned third sub-circuit 340 is assigned in the order of (q4q3q2q1q0), and a gate position is changed according to the permutation.

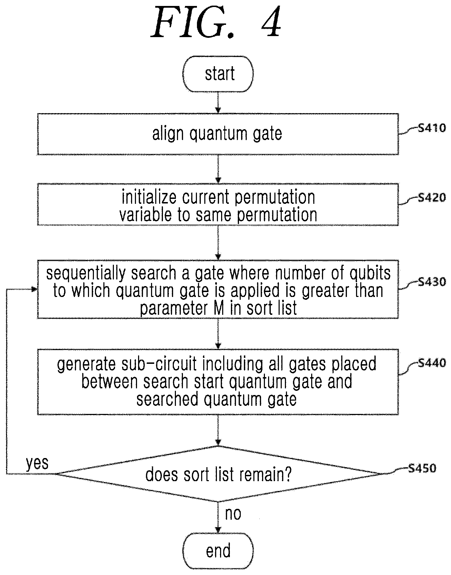

FIG. 4 is a flowchart of a method of partitioning an input quantum circuit, according to an embodiment. The quantum circuit simulation device 100 may partition a sub-circuit according to a size of a main memory. In various embodiments, the total number of accesses to a storage device required for quantum circuit simulation of the quantum circuit simulation device 100 is proportional to the number of sub-circuits. In order to perform high-performance simulation, a small number of sub-circuits has to be generated. Therefore, an algorithm for partitioning a sub-circuit may have a difficult problem and may be more than one. In various embodiments, the quantum circuit simulation device 100 may generate minimal sub-circuits for an input quantum circuit. In one embodiment, the quantum circuit simulation device 100 may partition an input quantum circuit into sub-circuits including only operatable gates according to a heuristic method. In the following, a method of partitioning the input quantum circuit of FIG. 3 will be described by way of an example.

In step S410, the quantum circuit simulation device 100 may align quantum gates. The quantum circuit simulation device 100 may align qubits to which gates are applied such that the smaller number comes first, and when two different gates are applied to the same qubit, the gates may be aligned to satisfy the order of the input quantum circuit.

In step S420, the quantum circuit simulation device 100 may initialize a current permutation variable to the same permutation (identity permutation). For example, an equivalent permutation of the input quantum circuit in FIG. 3 is (q4q3q2q1q0).

In step S430, the quantum circuit simulation device 100 may sequentially search a quantum gate sort list for a gate where the number of qubits to which the quantum gate is applied is greater than the parameter M. When there is no gate larger than the parameter M, the quantum circuit simulation device 100 may make the entire gate set into one sub-circuit and end the algorithm. In this case, the quantum circuit simulation device 100 assigns the permutation stored in the current permutation variable to the sub-circuit.

In step S440, the quantum circuit simulation device 100 may generate a sub-circuit including all gates located between a front quantum gate and a searched quantum gate. However, the searched quantum gate is not included therein. In this case, a permutation stored in the current permutation variable is assigned to the generated sub-circuit, and a permutation obtained according to a heuristic permutation generation method may be stored in the current permutation variable. The heuristic permutation generation method may be defined as the following steps A, B, and C.

In step A, M qubits from the right of the permutation currently stored in the permutation variable may be defined as local qubits, and the other qubits may be defined as non-local qubits. For example, when the currently stored permutation (the stored permutation before update) is (q1q2q0q4q3), and when M = 4, q3, q4, q0, and q2 are local qubits, and q1 is a non-local qubit.

In step B, a searched quantum gate and the quantum gates located behind the searched quantum gate are examined one by one. In this case, when the qubit to which each quantum gate is applied is local, a local count of the qubit is increased by 1, and when the qubit is non-local, a non-local count of the qubit is increased by 1. Local and non-local count values of qubits to which the searched quantum gate is applied are set to infinity.

In step C, qubits are aligned based on the counts found in step B and a permutation is returned. In this case, the order of qubits are located to the right as the non-local count is increased, and as the local count is increased in the same case. that is, the qubits are located below in a quantum circuit.

In step S450, the quantum circuit simulation device 100 may repeat step S430 to step S440 while aligned quantum gates remain.

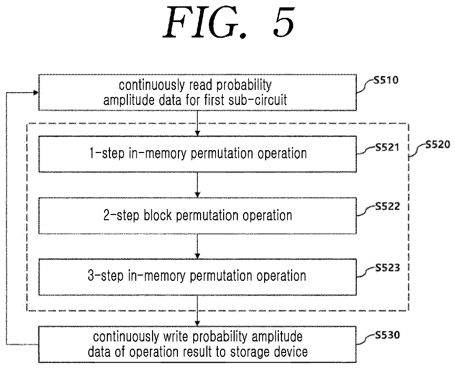

FIG. 5 is a flowchart of a method of simulating a plurality of sub-circuits, according to an embodiment. The quantum circuit simulation device 100 may perform simulation for each of the plurality of sub-circuits obtained by partitioning the input quantum circuit according to the following steps.

In step S510, the quantum circuit simulation device 100 may continuously read probability amplitude data for the first sub-circuit. In one embodiment, the quantum circuit simulation device 100 sequentially reads $2^{(M+4)}$ bytes of probability amplitude data for the first sub-circuit, which are sequentially stored in a storage, from the storage system 120 into a main memory. An exact position where the probability amplitude data for each sub-circuit is stored is determined according to the permutation assigned to the corresponding sub-circuit. Given a random permutation, a position in which the information (i.e., amplitude) of a random qubit $|b_n \dots b_1 b_0\rangle$ is stored, is represented by Equation 1.

$$\sum_{j=0}^{N-1} b_j \pi(q_j)$$

In Equation 1, $\pi(q_j)$ indicates a position of $q_j$ from the right in the given permutation. For example, $\pi(q_3)$ and $\pi(q_2)$ are respectively 0 and 3 with respect to the permutation (q1q2q0q4q3). Although it is possible to know all pieces of position information of each qubit for a random permutation through Equation 1, it is inefficient to simply read or write values by using this. This is because, a unit size read from the storage device may be very small (at least 16 bytes) depending on permutations, and in this case, a problem occurs in which a bandwidth of the storage device is not fully utilized. In one embodiment, a quantum circuit is simulated according to a 3-step permutation method to solve this problem.

In step S520, the quantum circuit simulation device 100 performs a permutation operation for the first sub-circuit according to a 3-step permutation operation. In one embodiment, a 3-step permutation operation is performed by partitioning one permutation operation into three steps. In this case, the permutation is partitioned into two in-memory permutations and a block permutation and is performed in the order of in-memory permutation, block permutation, and in-memory permutation. The in-memory permutation refers to an operation of changing a data layout in a memory after reading data into a main memory. Random in-memory permutation refers to a permutation in which only local qubits change. For example, (q1q2q0q4q3) is not an in-memory permutation, but (q4q2q0q1q3) is an in-memory permutation. The block permutation refers to changing the data layout in a storage. In this case, the block permutation refers to a permutation in which only B qubits change from the left. For example, when B = 2, (q1q2q0q4q3) is not the block permutation, but (q3q4q2q1q0) is the block permutation.

Any permutation may be easily converted to a 3-step permutation. For example, the permutation of (q1q2q0q4q3) is converted as follows.

(q4q1q2q3q0 1-step in-memory permutation) - (q1q4q2q3q0 2-step block permutation) - (q1q2q0q4q3 3-step in-memory permutation).

In step S521, a 1-step in-memory permutation operation in which the permutation of the first sub-circuit is converted may be performed, and in step S522, a 2-step block permutation operation in which the permutation of the first sub-circuit is converted may be performed, and in step S523, a 3-step in-memory permutation operation in which the permutation of a sub-circuit is converted may be performed. When using the 3-step permutation operation, the minimum unit of access operations for all storages may be fixed to the maximum, and accordingly, a bandwidth of a storage device may be utilized much better than a simple access. Meanwhile, an additional memory operation is required for two in-memory permutations, but this is acceptable because the additional memory operation is an access to memory and is much faster than the access to a storage.

In step S520, the quantum circuit simulation device 100 may apply gate operations of the sub-circuit to $2^{(M+4)}$ bytes of probability amplitude data loaded in the main memory. The gate operations may be changeably used. For example, calculations may be performed by using a GPU instead of a CPU, and in this case, communication between main memory and GPU memory may be added.

The partitioned sub-circuits are simulated sequentially (for example, in the order of the first sub-circuit, the second sub-circuit, and the third sub-circuit) by a quantum circuit simulator. In this case, the quantum circuit simulator knows an exact position value of the probability amplitude data for a sub-circuit to be used later and applies a prefetching technology to load the probability amplitude data into a main memory in advance before using the probability amplitude data. In particular, when a quantum gate operation is in progress, the probability amplitude data to be used next may be loaded into the main memory in advance, resulting in an operation-communication overlap effect, and accordingly, the entire execution time may be effectively reduced.

In step S530, the quantum circuit simulation device 100 may continuously write $2^{(M+4)}$ bytes of probability amplitude data continuously stored in the main memory to the storage system 120 as an operation result for the first sub-circuit. The quantum circuit simulation device 100 may sequentially and repeatedly perform step S510 to step S530 for the next sub-circuit.

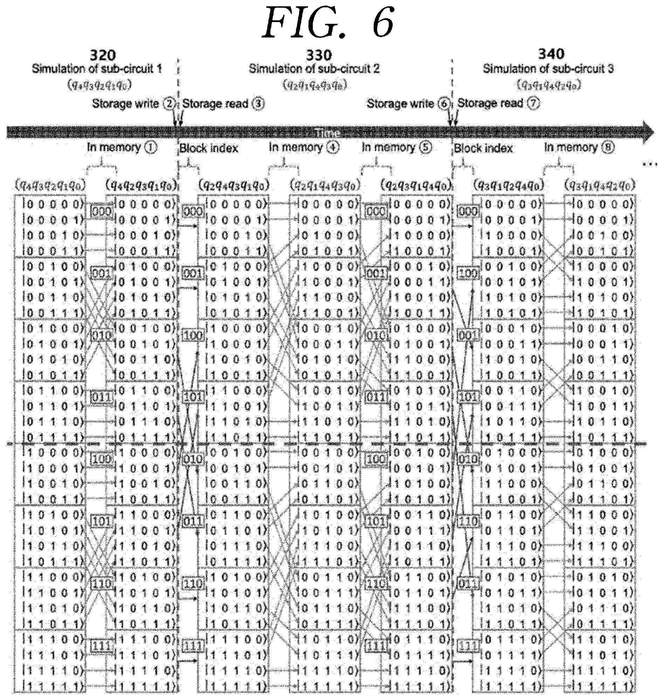

FIG. 6 is an example of a data representation for simulating a plurality of sub-circuits, according to an embodiment. FIG. 6 illustrates a change in data layout in which a 3-step permutation operation is applied to each of the three sub-circuits 320, 330, and 340 obtained by partitioning the input quantum circuit 310 of FIG. 3.

First, FIG. 6 illustrates that the first sub-circuit 320 starts from the same permutation and shows that the data layout changes in the order (①②③④) of 1-step in-memory permutation, 2-step block permutation, and 3-step in-memory permutation. Access (storage write/read) to a storage device occurs before the 2-step block permutation. Next, FIG. 6 illustrates that the data layout changes as the 3-step permutation operation for the second sub-circuit 33 is performed (⑤⑥⑦⑧).

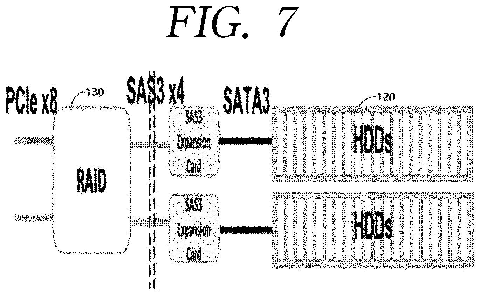

FIG. 7 is an example of implementation example of a storage system according to an embodiment. The storage system may be composed of a storage device that provides higher capacity at a lower cost than DRAM and may include one or more storages. Referring to FIG. 7, a storage system 120 is configured with an HDD. The quantum circuit simulation device 100 may connect the host system 110 to the storage system 120 through a RAID card 130. The RAID card 130 may be connected to a host system through a PCIe slot and may be connected to an HDD storage device that supports SATA3 by using a SAS expansion card.

DRAM used in conventional technology is more expensive by 297 times than an HDD based on a cost per GB, and even for the world's highest performance supercomputer in 2021, 50-qubit level quantum circuit simulation may not be performed. However, according to embodiments of the present disclosure, a quantum circuit of 50 qubits may be simulated by using only 16 storage systems including an HDD of 80x16 TB. A quantum circuit simulation system using a storage device and an optimization method according to embodiments have effects of scalability and economic efficiency.

The embodiments described above may be implemented by hardware components, software components, and/or a combination of hardware components and software components. For example, the device, method, and components described in the embodiments may each be implemented by one or more general-purpose computers or special-purpose computers, such as a processor, a controller, an arithmetic logic unit (ALU), a digital signal processor, a microcontroller, a field programmable gate array (FPGA), a programmable logic unit (PLU), a microprocessor, or any other device that may execute and respond to instructions. A processing device may execute an operating system (OS) and one or more software applications that run on the operating system. Also, a processing device may also access, store, operate, process, and generate data in response to execution of software. For the sake of ease of understanding, a single processing device may be described as being used, but those skilled in the art will understand that a processing device includes multiple processing elements and/or multiple types of processing elements. For example, a processing device may include multiple processors or one processor and one controller. Also, other processing configurations, such as parallel processors, may be implemented.

Software may include a computer program, code, instructions, or a combination thereof, which may configure a processing device to operate as desired or may independently or collectively command the processing device. Software and/or data may be embodied permanently or temporarily in any type of a machine, component, a physical device, virtual equipment, a computer storage medium or device, and a signal wave to be transmitted to be interpreted by or to provide instructions or data to a processing device. Software may be distributed over networked computer systems and stored or executed in a distributed manner. Software and data may be stored in one or more computer-readable recording media.

The method according to the embodiment may be implemented in the form of program instructions that may be executed by various computer devices and may be recorded on a computer-readable medium. The computer-readable medium may include program instructions, data files, data structures, or a combination thereof. Program instructions recorded on a medium may be specially designed and configured for the embodiment or may be known and available to those skilled in the art of computer software. Computer-readable recording media include, for example, magnetic media such as hard disks, floppy disks, and magnetic tapes, optical media such as a compact disk-read only memory (CD-ROM) and a digital video disk (DVD), magneto-optical media such as floptical disks, and hardware devices specifically configured to store and execute program instructions, such as read only memory (ROM), random access memory (RAM), and flash memory. Program instructions include, for example, machine language code that are generated by a compiler and a high-level language code that may be executed by a computer by using an interpreter and so on. The hardware devices described above may be configured to operate as one or more software modules to perform the operations of the embodiments, and vice versa.

As described above, although embodiments are described with limited examples and drawings, various modifications and changes may be made by those skilled in the art from the above description. For example, although the described technologies are performed in a different order from the described method, components of the described system, structure, device, circuit, and so on are coupled or combined in a different form from the described method, and/or the components are replaced or substituted with other components or equivalents, appropriate results may be achieved. Therefore, other implementations, other embodiments, and equivalents of the claims also fall within the scope of the claims described below.

**Claims**

1. A quantum circuit simulation device comprising:

   a storage system including one or more storage devices; and
   a host system connected to the storage system and configured to simulate a quantum circuit, wherein the quantum circuit stored in the storage system is partitioned into one or more sub-circuits, and
   the host system sequentially simulates the one or more sub-circuits in a main memory.

2. The quantum circuit simulation device of claim 1, wherein
   the host system sequentially reads the probability amplitude data into the main memory by accessing once the storage system where probability amplitude data required during each simulation for each of the one or more sub-circuits is continuously stored, and continuously writes the probability amplitude data from the main memory, in which the probability amplitude data that is a simulation result of each of the one or more sub-circuits is continuously stored, to the storage system.

3. The quantum circuit simulation device of claim 1, wherein
the host system generates a sub-circuit by sequentially checking quantum gates of the quantum circuit by using a heuristic algorithm based on a parameter M according to a size of the main memory.

4. The quantum circuit simulation device of claim 1, wherein
the host system sequentially perform the permutation operations by converting a permutation operation for each of the one or more sub-circuits into a 1-step in-memory permutation operation, a 2-step block permutation operation, and a 3-step in-memory permutation operation.

5. The quantum circuit simulation device of claim 4, wherein
the 1-step in-memory permutation operation and the 3-step in-memory permutation operation change a data layout in the main memory, and the 2-step block permutation operation changes a data layout in the storage device.

6. The quantum circuit simulation device of claim 1, wherein,
the host system continuously reads probability amplitude data for a next sub-circuit into the main memory in advance before simulation of the next sub-circuit by accessing the storage system once during an operation of a sub-circuit currently being operated in the main memory while sequentially simulating the one or more sub-circuits.

7. The quantum circuit simulation device of claim 1, wherein
the storage device includes one of HDD, SSD, and NVMe.

8. A quantum circuit simulation method comprising:

partitioning an input quantum circuit stored in a storage device into one or more sub-circuits; and simulating the one or more sub-circuits in a main memory by sequentially reading the one or more sub-circuits from the storage device.

9. The quantum circuit simulation method of claim 8, wherein
the simulating in the main memory includes sequentially reading the probability amplitude data into the main memory by accessing once the storage device where probability amplitude data required during each simulation for each of the one or more sub-circuits is continuously stored.

10. The quantum circuit simulation method of claim 9, further comprising:
continuously writing the probability amplitude data from the main memory, in which the probability amplitude data that is a simulation result of each of the one or more sub-circuits is continuously stored, to the storage device.

11. The quantum circuit simulation method of claim 8, wherein
the partitioning of the input quantum circuit into the one or more sub-circuits includes generating a sub-circuit by sequentially checking quantum gates of the input quantum circuit by using a heuristic algorithm based on a parameter M according to a size of the main memory.

12. The quantum circuit simulation method of claim 8, wherein
the simulation of the one or more sub-circuits includes sequentially performing the permutation operations by converting a permutation operation for each of the one or more sub-circuits into a 1-step in-memory permutation operation, a 2-step block permutation operation, and a 3-step in-memory permutation operation.

13. The quantum circuit simulation method of claim 12, wherein

the 1-step in-memory permutation operation and the 3-step in-memory permutation operation change a data layout in the main memory, and
the 2-step block permutation operation changes a data layout in the storage device.

14. The quantum circuit simulation method of claim 8, wherein
the simulation of the one or more sub-circuits includes continuously reading probability amplitude data for a next sub-circuit into the main memory in advance before simulation of the next sub-circuit by accessing the storage device once during an operation of a sub-circuit currently being operated in the main memory while sequentially simulating the one or more sub-circuits.

15. A computer-readable non-transitory recording medium storing a computer program including at least one instruction configured to cause a processor to perform the quantum circuit simulation method ac-

**EP 4 418 162 A1**

cording to claim 8.

# FIG. 1

<u>100</u>

host system `110`

first storage device

second storage device

third storage device

⋮

nth storage device

`120`

`130`

# FIG. 2

| | |
|---|---|
| input first quantum circuit | S210 |
| partition first quantum circuit into one or more sub-circuits | S220 |
| sequentially simulate one or more sub-circuits | S230 |

# FIG. 3

# FIG. 4

```
        ( start )
           │
           ▼
┌──────────────────────────────────┐
│       align quantum gate         │──S410
└──────────────────────────────────┘
           │
           ▼
┌──────────────────────────────────┐
│   initialize current permutation │──S420
│    variable to same permutation  │
└──────────────────────────────────┘
           │
           ▼
┌──────────────────────────────────┐
│ sequentially search a gate where │
│ number of qubits to which        │──S430
│ quantum gate is applied is        │
│ greater than parameter M in       │
│ sort list                         │
└──────────────────────────────────┘
           │
           ▼
┌──────────────────────────────────┐
│ generate sub-circuit including    │──S440
│ all gates placed between search   │
│ start quantum gate and            │
│ searched quantum gate             │
└──────────────────────────────────┘
           │
           ▼
   yes  ╱▔▔▔▔▔▔▔▔▔▔▔▔╲
 ◄──────◄ does sort list remain? ►──S450
        ╲▁▁▁▁▁▁▁▁▁▁▁▁╱
           │ no
           ▼
        ( end )
```

# FIG. 5

continuously read probability
amplitude data for first sub-circuit — S510

1-step in-memory permutation operation — S521 — S520

2-step block permutation operation — S522

3-step in-memory permutation operation — S523

continuously write probability amplitude
data of operation result to storage device — S530

# FIG. 6

# FIG. 7

<table>
<tr><td colspan="2"><b>INTERNATIONAL SEARCH REPORT</b></td><td colspan="2">International application No.<br><br><b>PCT/KR2022/005230</b></td></tr>
</table>

**A.    CLASSIFICATION OF SUBJECT MATTER**

**G06F 30/3308**(2020.01)i; **G06F 30/398**(2020.01)i; **G06F 3/06**(2006.01)i; **G06F 7/76**(2006.01)i

According to International Patent Classification (IPC) or to both national classification and IPC

**B.    FIELDS SEARCHED**

Minimum documentation searched (classification system followed by classification symbols)

G06F 30/3308(2020.01); G06F 17/16(2006.01); G06F 17/50(2006.01); G06F 30/20(2020.01); G06N 10/00(2019.01); G06N 99/00(2010.01); H03K 19/195(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양자 컴퓨터(quantum computer), 분할(partition), 부분 회로(sub circuit), 시뮬레이션(simulation), 메모리 크기(memory size)

**C.    DOCUMENTS CONSIDERED TO BE RELEVANT**

| Category* | Citation of document, with indication, where appropriate, of the relevant passages | Relevant to claim No. |
|---|---|---|
| X<br><br>Y | US 2019-0347575 A1 (INTERNATIONAL BUSINESS MACHINES CORPORATION) 14 November 2019 (2019-11-14)<br>    See paragraphs [0039], [0058], [0090] and [0105]; claim 1; and figure 1. | 1-2,6-10,14-15<br><br>3-5,11-13 |
| X | CN 110188885 B (ORIGIN QUANTUM COMPUTING TECHNOLOGY CO., LTD.) 06 April 2021 (2021-04-06)<br>    See claims 1-10. | 1,7-8,15 |
| X | US 2019-0095561 A1 (INTERNATIONAL BUSINESS MACHINES CORPORATION) 28 March 2019 (2019-03-28)<br>    See paragraphs [0056]-[0061] and [0161]; and figure 7. | 1,7-8,15 |
| Y | AVILA, Anderson et al. Optimizing D-GM quantum computing by exploring parallel and distributed quantum simulations under GPUs arquitecture. 2016 IEEE Congress on Evolutionary Computation (CEC) . pp. 5146-5153, 29 July 2016.<br>    See page 5150. | 3,11 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2022** | **06 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/005230**

**C.    DOCUMENTS CONSIDERED TO BE RELEVANT**

| Category* | Citation of document, with indication, where appropriate, of the relevant passages | Relevant to claim No. |
|---|---|---|
| Y | US 2017-0372217 A1 (INTERNATIONAL BUSINESS MACHINES CORPORATION) 28 December 2017 (2017-12-28)<br>See claim 1. | 4-5,12-13 |

Form PCT/ISA/210 (second sheet) (July 2019)

**INTERNATIONAL SEARCH REPORT**
**Information on patent family members**

International application No.

**PCT/KR2022/005230**

| Patent document cited in search report | | | Publication date (day/month/year) | Patent family member(s) | | | Publication date (day/month/year) |
|---|---|---|---|---|---|---|---|
| US | 2019-0347575 | A1 | 14 November 2019 | CN | 112041859 | A | 04 December 2020 |
| | | | | EP | 3791333 | A1 | 17 March 2021 |
| | | | | JP | 2021-521504 | A | 26 August 2021 |
| | | | | US | 11100417 | B2 | 24 August 2021 |
| | | | | US | 2021-0342731 | A1 | 04 November 2021 |
| | | | | WO | 2019-214907 | A1 | 14 November 2019 |
| CN | 110188885 | B | 06 April 2021 | CN | 110188885 | A | 30 August 2019 |
| US | 2019-0095561 | A1 | 28 March 2019 | CN | 111052122 | A | 21 April 2020 |
| | | | | JP | 2020-534603 | A | 26 November 2020 |
| | | | | US | 11250190 | B2 | 15 February 2022 |
| | | | | WO | 2019-058161 | A1 | 28 March 2019 |
| US | 2017-0372217 | A1 | 28 December 2017 | US | 9665829 | B1 | 30 May 2017 |
| | | | | US | 9864954 | B1 | 09 January 2018 |

Form PCT/ISA/210 (patent family annex) (July 2019)